# FASCICULE DE BREVET EUROPEEN

(11) **EP 0 410 917 B1**
(45) Date de publication et mention de la délivrance du brevet: **31.08.1994**
(21) Numéro de dépôt: 90460025.1
(22) Date de dépôt: 27.06.1990
(51) Int. Cl.: B60P 1/26

(54) **Mécanisme d'ouverture et de fermeture de la porte arrière d'une remorque**
Öffnungs- und Verschlussvorrichtung für die Hintertür eines Anhängers
Opening and closing mechanism of the rear door of a trailer

(30) Priorité: 27.07.1989 FR 8910332
(43) Date de publication de la demande: 30.01.1991
(73) Titulaire: ROLLAND S.A., F-29411 Landerneau Cédex (FR)
(72) Inventeur: Emily, Jean-Yves, F-29311 Landerneau Cedex (FR)
(74) Mandataire: Le Guen, Louis François

(56) Documents cités:
- EP-A- 0 331 597
- DE-U- 8 603 758
- FR-A- 2 134 925
- FR-A- 2 576 257
- FR-E- 65 449
- US-A- 3 759 406

## Description

La présente invention concerne un mécanisme d'ouverture et de fermeture de la porte arrière d'une remorque, en particulier d'une remorque agricole.

On connait, par la demande de brevet n° 88 02825 déposée le 29 février 1988 par la demanderesse, (qui correspond à EP-A-0331597), un mécanisme de commande d'ouverture et de fermeture de la porte d'une benne basculante comprenant, de chaque côté longitudinal de la benne, un premier bras longitudinal à une extrémité duquel est suspendu le bord vertical correspondant de la porte de la benne, ce premier bras pouvant pivoter autour d'un premier axe transversal qui est porté par la benne basculante, et ayant son autre extrémité reliée par une articulation à l'extrémité libre d'un second bras qui pivote autour d'un second axe transversal, qui est porté par le châssis de la benne, la benne basculant autour d'un troisième axe de basculement, également porté par le châssis. Chaque premier axe est logé dans un trou oblong longitudinal de la paroi latérale de la benne basculante, avec des moyens pour déplacer chaque premier axe dans son trou oblong, vers l'arrière dès le début du relèvement de la benne et vers l'avant à la fin de la descente de la benne.

Avec le mécanisme décrit dans ce document, c'est l'opération de bennage, consistant à lever la benne, qui commande l'ouverture de la porte arrière de la benne.

Dans certains cas, le fait que l'ouverture de la benne et le bennage soient faits simultanément peut présenter des inconvénients. En particulier, lorsque commence le bennage, la poussée du chargement contre la porte arrière de la benne, qui n'est encore que peu ouverte, peut être telle que le mécanisme se bloque. Une intervention humaine peut être rendue nécessaire pour le débloquer, ce qui peut représenter un danger pour son exécutant.

Par ailleurs, certaines remorques sont munies d'un plateau fixe et c'est un mécanisme d' entraînement à tapis roulant monté sur ce plateau qui permet d'effectuer le déchargement de la benne. La porte arrière d'une telle remorque doit donc être munie d'un mécanisme d'ouverture et de fermeture autonome.

On connaît notamment, par le document de brevet FR-A-2 134 925, un mécanisme d'ouverture et de fermeture de la porte arrière d'une benne basculante qui ne nécessite pas le basculement de la benne pour le déchargement. Ce mécanisme est essentiellement constitué d'un bras longitudinal sur le bord arrière duquel est fixée la porte arrière. L'ensemble constitué desdits bras et de ladite porte arrière peut pivoter autour d'un axe transversal qui est solidaire du bras et qui est logé dans un trou oblong de la paroi latérale de la benne. Un vérin hydraulique dont une extrémité est reliée à une première articulation fixée sur la paroi latérale correspondante de la benne et dont l'autre extrémité est reliée à une seconde articulation prévue sur le bras permet d'actionner ce mécanisme et de commander l'ouverture et la fermeture de la porte arrière.

L'inconvénient de ce mécanisme particulier est que le basculement de la benne ne permet pas d'ouvrir la porte arrière.

Le but de l'invention est donc de proposer un mécanisme d'ouverture et de fermeture de la porte arrière d'un remorque dont le fonctionnement est soit indépendant de toute autre opération (déchargement, bennage, etc.) et soit dépendant du bennage.

Par ailleurs, quand on ajoute des éléments de rehaussement sur la benne, l'ouverture des portes des mécanismes de l'art antérieur nécessite que l'arrière des éléments de rehaussement soit coupé en biais. Il n'y a alors plus d'étanchéité entre la porte et les éléments de rehaussement au-dessus des bords en biais.

Un autre but de l'invention consiste à prévoir un mécanisme d'ouverture et de fermeture de la porte arrière d'une remorque qui permette d'installer sur les ridelles de base des éléments de rehaussement tout en assurant une bonne étanchéité au niveau de ces éléments.

Un autre but de l'invention est d'accroître l'étanchéité entre la porte arrière et la remorque elle-même.

Ce but est atteint par la mise en oeuvre de la combinaison des moyens qui sont définis dans la revendication 1. Des caractéristiques préférentielles sont indiqués dans les revendications dépendantes.

Ces caractéristiques, ainsi que d'autres, apparaîtront plus clairement à la lecture de la description suivante d'un exemple de réalisation, ladite description étant faite en relation avec les dessins joints, parmi lesquels:
la Fig. 1 est une vue schématique en élévation d'une remorque à benne équipée d'un mécanisme d'ouverture et de fermeture de la porte arrière, suivant l'invention, cette porte étant fermée, et
les Figs. 2 à 4 sont des vues schématiques en élévation de la remorque de la Fig. 1, la porte arrière se trouvant dans états d'ouverture croissants.

La description qui suit est faite en considérant que le mécanisme d'ouverture et de fermeture objet de la présente invention est monté sur une benne basculante d'une remorque agricole. Il pourrait, néanmoins , être monté sur une remorque dont le plateau est fixe, cette remorque ne comportant donc pas de moyens permettant le basculement de ce plateau.

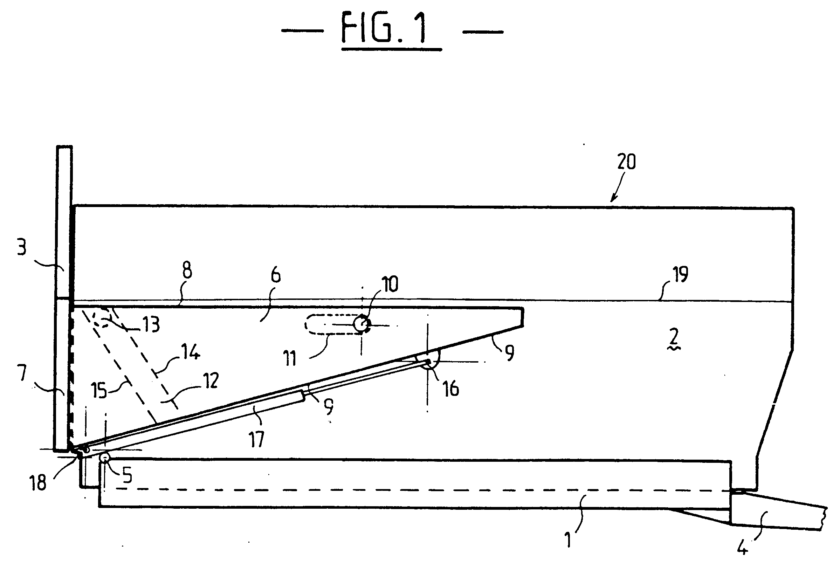

La remorque de la Fig. 1 comprend un châssis 1 et une benne 2 fermée par une porte arrière 3. Les roues des essieux du châssis ne sont pas montrées pour simplifier le dessin. L'axe 5 de basculement de la benne 2 est montré à l'arrière du châssis 1. Sur une remorque dont la benne n'est pas basculante, il va sans dire que cet axe n'existe pas. Le châssis est, dans l'exemple décrit, pourvu d'un timon 4, mais l'invention s'applique également aux remorques automotrices.

La porte 3 est supportée par deux mécanismes de commande symétriques, dont seul un est visible dans les dessins, l'autre étant symétrique de l'autre côté de la remorque. Chaque mécanisme comprend un bras 6 de forme triangulaire pour assurer une rigidité suffisante. Le triangle du bras 6 a un petit côté 7 auquel la porte 3 est accrochée, un grand côté 8 pratiquement horizontal lorsqu'elle est en position fermée et un grand côté oblique 9 réunissant les deux autres. Près du côté 8, est prévu un axe court 10 qui est prisonnier dans un trou oblong 11 d'une plaque, non montrée, fixée sur la ridelle correspondante de la benne 2. Au repos le trou oblong 11 est orienté horizontalement.

Par ailleurs, dans la zone voisine du côté 7 du triangle, entre les côtés 8 et 9, est prévue une rainure 12 qui descend obliquement de l'arrière vers l'avant. Au repos, dans la rainure 12, se loge un galet 13 dont le diamètre est égal, au jeu près, à la distance entre le bord avant 14 et le bord arrière 15 de la rainure 12. Le galet 13 est fixé au flanc correspondant de la benne 2.

La rainure 12 fait un angle d'environ 35° avec la verticale.

Sur le côté 9 du triangle 6, en un point situé à l'avant de l'axe 10, entre cet axe et le sommet formé par les côtés 8 et 9, est prévue une articulation 16 recevant la tige d'un vérin 17 à double effet. Le fond arrière de ce vérin 17 est fixé sur un axe 18 monté sur chaque flanc de la benne 2 et situé en dessous d'une ligne horizontale qui passerait par l'articulation 16 et en arrière de l'axe de pivotement 10. De préférence, l'axe 18 se trouve légèrement au dessus et en avant du bord inférieur arrière de la benne 2. Les points de fixation 16 et 18 du vérin 17 sont positionnés tels que son axe soit sensiblement parallèle au grand côté 9 du triangle 6, lorsque la porte est fermée.

Dans le dessin, on a supposé que le bord supérieur 19 de chaque ridelle était juste au dessus du trou oblong 11 et que la ridelle était surmontée d'un élément de rehaussement qui avait son bord supérieur 20 nettement plus haut que le bord 19.

On va décrire le fonctionnement du mécanisme de commande d'ouverture et de fermeture en relation avec les Figs. 1 à 4.

Au repos, le galet 13, Fig. 1, est en haut de la rainure 12 et l'axe 10 à l'avant du trou oblong 11. Le vérin 17 exerce sur chacun de ces axes de fixation 16 et 18, une force qui tend à les faire s'éloigner l'un de l'autre. Le bras 6 tend alors à pivoter autour de l'axe 10 et la porte 3 est pressée contre les bords arrières des flancs de la benne 2, ce qui assure une bonne étanchéité entre la porte et la benne.

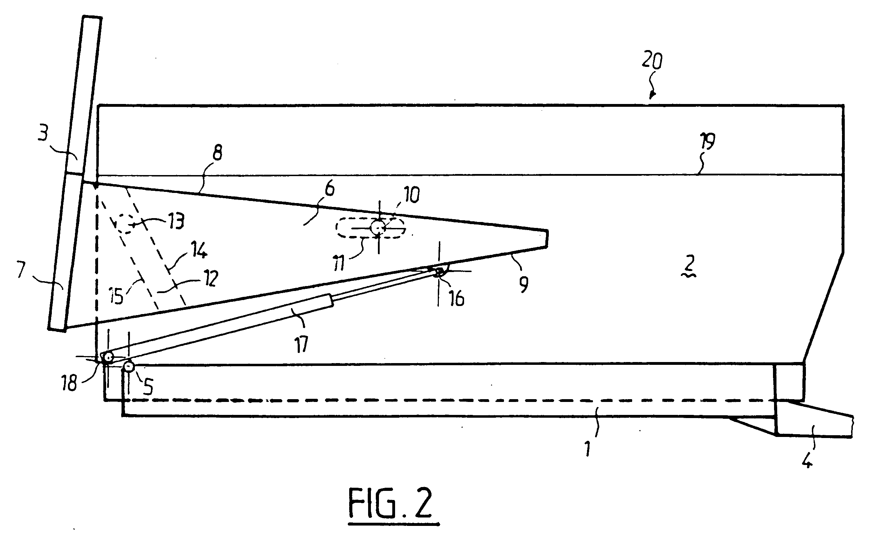

Lorsque l'ouverture est souhaitée, la pression dans le vérin 17 est inversée si bien que la force qu'il exerce sur chacun de ces axes 16 et 18 les fait se rapprocher. Le bras 6 pivote alors autour de l'axe 10 tout en effectuant un mouvement de translation vers l'arrière. En effet, en pivotant, le bras 6 vient, par le bord 15 de la rainure 12, en contact avec le galet 13. Celui-ci glisse vers le bas de la rainure dont la pente par rapport à la verticale oblige la porte à effectuer un mouvement de translation vers l'arrière. Ce mouvement est rendu possible grâce au trou oblong 11 dans lequel se déplace, vers l'arrière, l'axe 10. La porte arrière 3 se décolle donc de la benne 2 et commence son ouverture (Fig. 2).

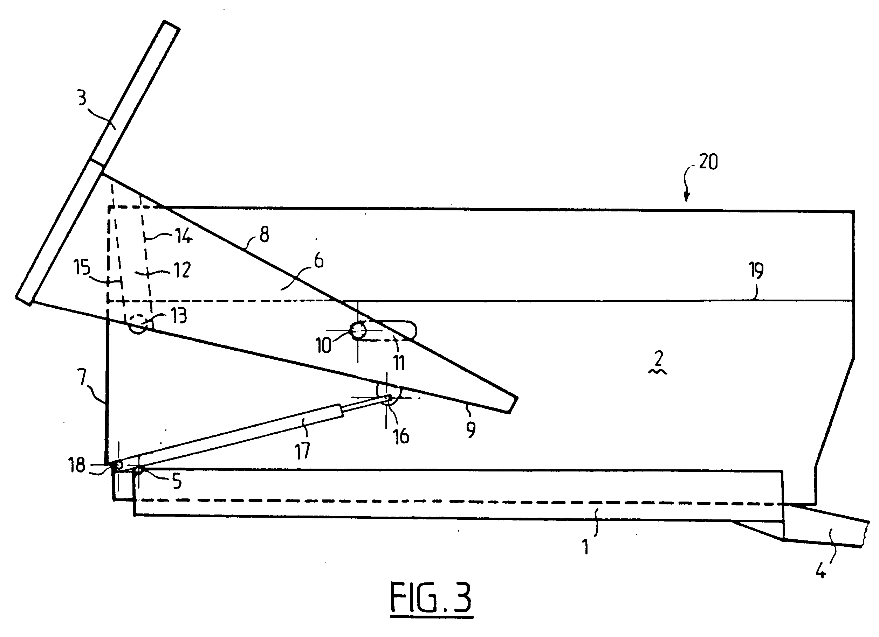

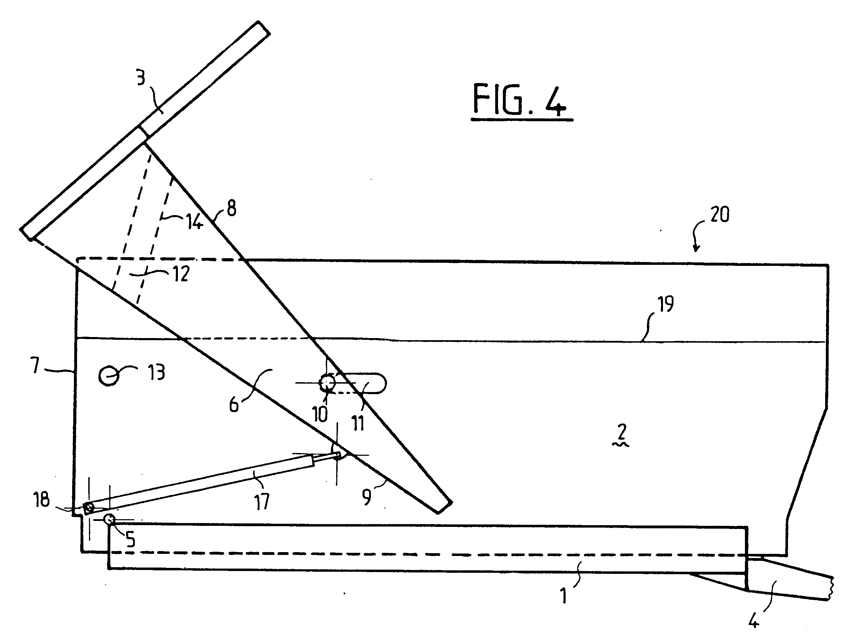

La Fig. 3 montre l'inclinaison de la porte 3 pour laquelle l'axe 10 est arrivé tout à l'arrière du trou oblong 11. A partir de ce moment, le galet 13 sort de la rainure 12 par le bas et le bras 6 ne fait plus que pivoter autour de l'axe 10, ceci jusqu'à sa position d'ouverture complète (Fig. 4).

Notons ici que le fait que la porte effectue, en plus de son mouvement de pivotement autour de l'axe 10, un mouvement de translation vers l'arrière, lui permet de se dégager, pendant son ouverture, du coin arrière de l'élément de rehaussement 20.

La porte étant maintenant ouverte, l'opération de déchargement peut être effectuer. Avec une benne basculante, cette opération est réalisée en levant la benne et en la faisant pivoter autour de l'axe 5. Une fois cette opération effectuée, la benne est remise dans la position représentée à la Fig. 4.

Pour revenir dans la position de repos, porte fermée, il faut inverser la pression de fluide dans le vérin 17 si bien que la force qu'il exerce sur chacun de ces axes 16 et 18 les fait s'éloigner l'un de l'autre. La porte 3 et le bras 6 passent alors de la position montrée à la Fig. 4 à celle qui est montrée à la Fig. 3. Entre la position de la Fig. 3 et celle de la Fig. 2, le galet 13, entré dans la rainure 12, appuie sur le côté 14 de celle-ci, pour repousser le bras 6 vers l'avant et donc l'axe 10 vers l'avant du trou oblong 11. Une fois dans la position montrée à la Fig. 1, la pression de fluide dans le vérin 17 permet à la porte d'être pressée contre la benne 2 ce qui assure l'étanchéité entre cette porte et la benne.

En réalité, les bords avant 15 et 14 de la rainure 12 constituent les surfaces de deux cames sur lesquelles agit le galet 13. Bien entendu, dans l'exemple de réalisation montré, ces cames sont parallèles, mais cela n'est pas obligatoire. En particulier, la partie basse entre les cames peut être plus évasée de manière à, par exemple, assurer le guidage du galet 13 lors de la descente de la porte. En variante, les points bas de ces cames peuvent ne pas coïncider avec le côté oblique 9 du bras 6.

## Revendications

1. Mécanisme d'ouverture et de fermeture de la porte arrière (3) d'une remorque, comprenant, de chaque côté longitudinal de la benne, un bras longitudinal (6) pouvant pivoter autour d'un axe (10) transversal solidaire du bras (6) qui est logé dans un trou oblong (11) de la paroi latérale de la benne, la porte arrière de la benne étant fixée, par son bord correspondant, à l'extrémité arrière du bras (6), et, également de chaque côté de la benne, un vérin hydraulique (17) dont une extrémité est reliée à une première articulation (18) fixée sur la paroi latérale correspondante de la benne et dont l'autre extrémité est reliée à une seconde articulation (16) prévue sur le bras (6), caractérisé en ce que ledit trou oblong (11) s'étend dans le sens longitudinal de la benne, en ce que le vérin (17) a sa première articulation (18), à l'arrière de l'axe de pivotement (10), qui est à un niveau inférieur à celui de la seconde articulation (16), et a sa seconde articulation (16) qui est montée au delà de l'axe de pivotement (10) du bras (6), et en ce qu'il comporte des moyens pour déplacer l'axe de pivotement (10) dans son trou oblong (11), vers l'arrière dès le début de l'ouverture de la porte arrière de la benne et vers l'avant à la fin de la fermeture de la porte, lesdits moyens étant prévus pour que la porte effectue un mouvement vers l'arrière au moment de son ouverture et un mouvement vers l'avant au moment de sa fermeture.

2. Mécanisme d'ouverture et de fermeture selon la revendication 1, caractérisé en ce que les moyens pour déplacer l'axe de pivotement (10) dans son trou oblong sont constitués d'un galet transversal (13) logé entre deux cames (14, 15) portées par le bras (6) et descendant obliquement de l'arrière vers l'avant, le galet (15) glissant vers le bas sur la came arrière (15) lors de l'ouverture de la porte, et glissant vers le haut sur la came avant (14) lors de la fermeture de la porte.

3. Mécanisme d'ouverture et de fermeture selon la revendication 2, caractérisé en ce que les cames ont des longueurs limitées.

4. Mécanisme d'ouverture et de fermeture selon l'une des revendications 2 à 3, caractérisé en ce que les deux cames (14, 15) sont les bords parallèles d'une rainure (12) pratiquée dans le bras longitudinal (6).

5. Mécanisme d'ouverture et de fermeture selon la revendication 4, caractérisé en ce que la direction de la rainure (12) fait un angle d'environ 35°.

6. Mécanisme d'ouverture et de fermeture selon les revendications 1 à 5, caractérisé en ce que le bras (6) est constitué d'un triangle ayant un côté vertical (7) auquel est accrochée la porte (3), un côté sensiblement horizontal lorsque la porte est en position fermée, et un côté (9) oblique et en ce que les points de fixation (16 et 18) du vérin hydraulique (17) sont positionnés de telle manière que l'axe longitudinal de ce piston soit sensiblement parallèle au côté oblique (9) de ce triangle.

## Claims

1. Opening and closing mechanisms of the rear door (3) of a trailer, comprising on each longitudinal side of the skip, a longitudinal arm (6) capable of pivoting around an axle (10) integral with the arm (6) which is lodged in an oblong hole (11) of the lateral wall of the skip, the rear door of the skip being fixed by its corresponding edge to the rear end of the arm (6) and likewise on each side of the skip a hydraulic jack (17) one end of which is connected to a first articulation (18) fixed on the corresponding lateral wall of the skip and the other end of which is connected to a second articulation (16) provided on the arm (6), characterised in that the said oblong hole (11) extends in the longitudinal direction of the skip, in that the jack (17) has its first articulation (18) at the rear of the pivot axle (10) which is at a lower level than that of the second articulation (16) which is mounted beyond the pivot axle (10) of the arm (6) and in that it comprises means for displacing the pivot axle (10) in its oblong hole (11) towards the rear from the beginning of the opening of the rear door of the skip and towards the front to the end of the closing of the door the said means being provided so that the door carries out a movement towards the rear at the moment of its opening and a movement towards the front at the moment of its closing.

2. Opening and closing mechanism according to claim 1, characterised in that the means for displacing the pivot axle (10) in its oblong hole are constituted by a transverse roller (13) lodged between two cams (14,15) carried by the arm (6) and descending obliquely from the rear towards the front, the roller (15) sliding downwards on the rear cam (15) at the time of opening the door and sliding upwards on the front cam (14) at the time of closing the door.

3. Opening and closing mechanism according to claim 2, characterised in that the cams have limited lengths.

4. Opening and closing mechanism according to one of the claims 2 and 3, characterised in that the two cams (14, 15) are parallel edges of a groove (12) made in the longitudinal arm (6).

5. Opening and closing mechanism according to claim 4, characterised in that the direction of the groove (12) is at an angle of about 35°.

6. Opening and closing mechanism according to claims 1 to 5, characterised in that the arm (6) is constituted by a triangle having a vertical side (7) to which is hooked the door 3, a side substantially horizontal when the door is in the closed position and an oblique side (9) and in that the fixing points (16 and 18) of the hydraulic jack (17) are positioned such that the longitudinal axis of this piston is substantially parallel to the oblique side (9) of this triangle.

## Patentansprüche

1. Öffnungs und Verschlußvorrichtung für die Hintertür (3) eines Anhängers, enthaltend auf jeder Längsseite des Laderaumes einen länglichen Arm (6), der um eine mit dem Arm (6) verbundene Querachse (10) schwenkbar ist, die in einem Langloch (11) der Seitenwand des Laderaumes gelagert ist, wobei die Hintertür des Laderaumes über ihre jeweilige Kante mit dem hinteren Ende des Armes (6) und ebenso mit jeder Seite des Laderaumes verbunden ist, ferner enthaltend an jeder Seite des Laderaumes eine hydraulische Winde (17), deren eines Ende mit einem ersten Gelenk (18) verbunden ist, das auf der entsprechenden Seitenwand des Laderaumes befestigt ist, und dessen anderes Ende mit einem zweiten, auf dem Arm (6) vorgesehenen Gelenk (16) verbunden ist, **dadurch gekennzeichnet**, daß das Langloch (11) sich in Längsrichtung des Laderaumes erstreckt, indem die Winde (17) mit ihrem ersten Gelenk (18) hinter der Schwenkachse (10) unterhalb des zweiten Scharniers (16) liegt und mit ihrem zweiten Gelenk (16) unterhalb der Schwenkachse (10) des Armes (6) montiert ist, und daß Mittel vorgesehen sind, die die Schwenkachse (10) in ihrem Langloch (11) mit Beginn des Öffnens der Hintertür des Laderaumes nach hinten und am Ende des Schließens der Tür nach vorne verschieben, und daß die Mittel bewirken, daß die Tür im Augenblick ihres Öffnens eine Bewegung nach hinten und im Augenblick ihres Schließens eine Bewegung nach vorne ausführt.

2. Öffnungs- und Verschlußvorrichtung nach Anspruch 1, **dadurch gekennzeichnet**, daß die Mittel zum Verschieben der Schwenkachse (10) in ihrem Langloch durch eine Quer-Leitrolle (13) gebildet sind, die zwischen zwei Führungsarmen (14, 15) gelagert ist, die durch den Arm (6) getragen sind und schräg von hinten nach vorne abfallen, wobei die Leitrolle (13) mit Beginn des Öffnens der Tür auf dem hinteren Führungsarm (15) nach unten und mit Beginn des Schließens der Tür auf dem vorderen Führungsarm (14) nach oben gleitet.

3. Öffnungs- und Verschlußvorrichtung nach Anspruch 2, **dadurch gekennzeichnet**, daß die Führungsarme begrenzte Längen aufweisen.

4. Öffnungs- und Verschlußvorrichtung nach einem der Ansprüche 2 - 3, **dadurch gekennzeichnet**, daß die beiden Führungsarme (14, 15) durch die parallelen Kanten einer in den Längsarm (6) eingearbeiteten Nut (12) gebildet sind.

5. Öffnungs- und Verschlußvorrichtung nach Anspruch 4, **dadurch gekennzeichnet**, daß die Richtung der Nut (12) einen Winkel von etwa 35° bildet.

6. Öffnungs- und Verschlußvorrichtung nach Anspruch 1 - 5, **dadurch gekennzeichnet**, daß der Arm (6) die Form eines Dreiecks hat, das eine senkrechte Kante (7), an der die Tür (3) aufgehängt ist, eine im wesentlichen horizontale Kante bei geschlossener Lage der Tür sowie eine schräg verlaufende Kante (9) aufweist und daß die Befestigungspunkte (16 und 18) der hydraulischen Winde (17) derart angeordnet sind, daß die Längsachse des Kolbens im wesentlichen parallel zur schrägen Kante (9) des Dreiecks verläuft.
